# EUROPÄISCHE PATENTSCHRIFT

(11) **EP 3 458 175 B1**
(45) Veröffentlichungstag und Bekanntmachung des Hinweises auf die Patenterteilung: **03.06.2020**
(21) Anmeldenummer: 17717725.0
(22) Anmeldetag: 18.04.2017
(51) Int. Cl.: B01D 29/21, B01D 29/96

(54) **FILTEREINRICHTUNG**
FILTER DEVICE
DISPOSITIF DE FILTRATION

(30) Priorität: 20.05.2016 DE 102016208789
(43) Veröffentlichungstag der Anmeldung: 27.03.2019
(73) Patentinhaber: MAHLE International GmbH, 70376 Stuttgart (DE)
(72) Erfinder: DOMINGUES, Tadeu Geraldo, 13201-030 Jundiai - Sao Paulo (BR); FERRARI, Felipe, 13344-450 Indaiatuba - Sao Paulo (BR); FRITZ, Luiz Carlos, 13339-250 Indaiatuba - Sao Paulo (BR); GÄNSWEIN, Matthias, 73732 Esslingen (DE); HÄUSSERMANN, Uli, 70734 Fellbach (DE); RUTHA, Josef, 73635 Rudersberg (DE); JUN YOSHINO, Fernando, 13214-660 Jundiai - Sao Paulo (BR)
(74) Vertreter: BRP Renaud & Partner mbB Rechtsanwälte Patentanwälte Steuerberater
(86) Internationale Anmeldenummer: PCT/EP2017/059109
(87) Internationale Veröffentlichungsnummer: WO 2017/198408

(56) Entgegenhaltungen:
- EP-B1- 1 690 581
- WO-A1-2015/173624
- JP-U- H0 685 007
- US-A1- 2011 147 297

## Beschreibung

Die vorliegende Erfindung betrifft eine Filtereinrichtung mit einem Filtergehäusetopf und einem Filterkopf, wobei in dem Filtergehäusetopf ein Ringfilterelement angeordnet ist, gemäß dem Oberbegriff des Anspruchs 1.

Aus der US 2011/0147297 A1 ist eine gattungsgemäße Filtereinrichtung mit einem Filtergehäusetopf und einem Filterkopf bekannt, wobei in dem Filtergehäusetopf ein Ringfilterelement mit einer oberen und einer unteren Endscheibe angeordnet ist. Die obere und die untere Endscheibe fassen dabei stirnseitig ein dazwischen angeordnetes Filtermaterial ein. An der oberen Endscheibe des Ringfilterelements sind zumindest zwei radial nach außen ragende Bajonettflügel angeordnet, die mit an dem Filtergehäusetopf angeordneten Ausnehmungen in der Art eines Bajonettverschlusses zusammenwirken.

Aus der EP 1 690 581 B1 ist ein Flüssigkeitsfiltersystem für eine Brennkraftmaschine mit einem becherförmigen Gehäuse bekannt, welches lösbar mit einem Aufnahmekopf verbindbar ist, wobei in dem Gehäuse ein Filterelement angeordnet ist. Das Gehäuse ist dabei mit ersten Formschlusselementen versehen, die sich über wenigstens einen Teil des Außenumfangs des Gehäuses und/oder dessen Unterkante erstrecken. Die Formschlusselemente sind dabei durch jeweils wenigstens eine sich axial erstreckende Ausnehmung unterbrochen, wobei das Filterelement eine flüssigkeitsdichte Ummantelung aufweist, die an ihrer Außenseite und/oder an ihrer Unterkante mit zweiten Formschlusselementen versehen ist, die beim Einsetzen des Filterelements in das Gehäuse in die Ausnehmung in den ersten Formschlusselementen einsetzbar sind.

Generell ist es beim Austausch von hängenden Filtern erwünscht, dass diese zusammen mit einem Filtergehäusetopf vom Filterkopf abgenommen werden können, ohne dass diese in unerwünschter Weise am Filterkopf hängen bleiben und dadurch nahezu separat demontiert werden müssen. Dies kann beispielsweise über die aus dem Stand der Technik bekannten Bajonettverschlüsse erreicht werden, welche jedoch oftmals den Nachteil aufweisen, dass sich diese unter Umständen bereits beim Lösen des Filtergehäusetopfes vom Filterkopf ebenfalls lösen können.

Die vorliegende Erfindung beschäftigt sich daher mit dem Problem, für eine Filtereinrichtung der gattungsgemäßen Art eine verbesserte oder zumindest eine alternative Ausführungsform anzugeben, die insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen speziell konstruierten Bajonettverschluss zur Fixierung eines Ringfilterelements an einem Filtergehäusetopf vorzusehen, wobei an dem Ringfilterelement zusätzlich Mitnehmer angeordnet sind, die mit filterkopfseitigen Rampen und Anschlägen derart zusammenwirken, dass zum einen eine exakt definierte Einbaulage des Ringfilterelements erzwungen und das Ringfilterelement zum anderen beim Öffnen des Filtergehäuses, das heißt beim Entfernen des Filtergehäusetopfs zuverlässig in letzterem gehalten wird. Die erfindungsgemäße Filtereinrichtung besitzt dabei einen becherförmigen Filtergehäusetopf, der lösbar mit einem Filterkopf verbindbar ist. In dem Filtergehäusetopf ist dabei das zuvor beschriebene Ringfilterelement angeordnet, welches ein in eine obere Endscheibe und in eine untere Endscheibe eingebettetes Filtermaterial aufweist. An der oberen Endscheibe des Ringfilterelements sind dabei zumindest zwei radial nach außen ragende Bajonettflügel angeordnet, die mit an dem Filtergehäusetopf angeordneten Ausnehmungen in der Art eines Bajonettverschlusses zusammenwirken. Erfindungsgemäß definieren dabei die Ausnehmungen in Umfangsrichtung längsendseitig zumindest eine erste Endstellung des darin geführten Bajonettflügels, in deren Bereich eine Hinterschnittkontur vorgesehen ist, in welcher der Bajonettflügel bei montierter Filtereinrichtung verrastet, das heißt fixiert ist. An der oberen Endscheibe des Ringfilterelements sind zumindest zwei Mitnehmer angeordnet, während am Filterkopf eine Rampenkontur mit zumindest zwei in Richtung der Mitnehmer ansteigenden Rampen und zwei sich daran in Umfangsrichtung anschließenden Anschlägen angeordnet ist. Die Rampenkontur bzw. deren Rampen und Anschläge wirkt/wirken dabei mit den endscheibenseitigen Mitnehmern derart zusammen, dass bei einem Montieren der Filtereinrichtung die endscheibenseitige Mitnehmer auf den Rampen bis zum jeweiligen Anschlag gleiten und dabei das Ringfilterelement immer mehr in den becherförmigen Filtergehäusetopf hineindrücken, wobei beim Erreichen bzw. nach dem Erreichen der Anschläge die Bajonettflügel in der ersten Endstellung in der zugehörigen Ausnehmung in die jeweilige Hinterschnittkontur gedrückt werden. Der Filtergehäusetopf besitzt dabei mittels seiner Ausnehmungen und den darin geführten, ringfilterelementseitigen Bajonettflügeln, eine Sicherung und ermöglicht über eine Entnahmekontur zudem eine Aus- und Einbauposition. Über diese Entnahmekontur im Filtergehäusetopf kann das Ringfilterelement in den Filtergehäusetopf eingesetzt werden. Die Mitnehmer des Ringfilterelements führen letzteres beim Einbau in die hierfür vorgesehene Verbauposition, in welcher die Bajonettflügel in der jeweiligen längsendseitigen ersten Endstellung in dem dort angeordneten Hinterschnitt verrasten. Beim Ausbau wird das Ringfilterelement über die Mitnehmer über den Hinterschnitt in die Entnahmeposition gedreht, in welcher die Bajonettflügel vorzugsweise an einer zweiten Endstellung der Ausnehmung anschlagen. In dieser Position kann der Filtergehäusetopf vom Filterkopf gelöst werden. Nun kann der Filtergehäusetopf zusammen mit dem darin angeordneten Ringfilterelement vom Filterkopf entnommen werden, wobei durch die axiale Fixierung des Ringfilterelements über seine Bajonettflügel in der zugehörigen Ausnehmung gewährleistet werden kann, dass das Ringfilterelement immer zusammen mit dem Filtergehäusetopf vom Filterkopf abgezogen wird. Am Filterkopf sind - wie vorher beschrieben - Gegenkonturen, nämlich die Rampen mit den zugehörigen Anschlägen angeordnet, die das Ringfilterelement in die jeweilige Betriebs- bzw. Ausbauposition verdrehen. Durch die Rampen kann dabei gewährleistet werden, dass das Ringfilterelement in der Betriebsposition in die Hinterschnitte und damit hinter eine dort angebrachte Verrastung gedrückt und damit fixiert wird. Der besondere Vorteil der erfindungsgemäßen Filtereinrichtung liegt dabei darin, dass das Ringfilterelement stets zusammen mit dem Filtergehäusetopf vom Filterkopf abgezogen werden kann und nicht in unerwünschter Weise dort verbleibt.

Bei einer vorteilhaften Weiterbildung der erfindungsgemäßen Lösung sind die Bajonettflügel und/oder die Mitnehmer einstückig mit der oberen Endscheibe ausgebildet. Dies ermöglicht eine einerseits kostengünstige und andererseits qualitativ hochwertige Fertigung der Endscheibe, beispielsweise als Kunststoffspritzgussteil.

Bei einer weiteren vorteilhaften Ausführungsform der erfindungsgemäßen Lösung ist zwischen dem Filterkopf und dem Ringfilterelement ein Ventil angeordnet, das ausschließlich bei eingebautem Ringfilterelement geöffnet ist. Wird somit der Filtergehäusetopf mit dem Filterkopf verbunden, ohne dass dabei ein Ringfilterelement eingebaut ist, bleibt das Ventil geschlossen und ein Fluiddurchlauf, beispielsweise ein Durchlauf von Kraftstoff oder Öl, erfolgt nicht. Das erfindungsgemäß vorgesehene Ventil stellt somit ein Sicherheitsventil dar.

Bei einer weiteren vorteilhaften Ausführungsform der erfindungsgemäßen Lösung weist das Ventil einen rohrförmigen Ventilkörper mit zumindest einer mantelseitigen Öffnung und einen darauf verschiebbaren Ventilschieber auf, wobei der Ventilkörper über eine Rastverbindung mit dem Filterkopf verrastet ist. Durch die Rastverbindung kann der Einbau des Ventils in den Filterkopf besonders einfach gestaltet werden, ebenso wie eine Demontage, da hierfür lediglich der Filterkörper in die zugehörige Rastkontur des Filterkopfes gedrückt und dort verrastet bzw. aus dieser auch wieder gelöst werden muss.

Zweckmäßig ist eine Feder vorgesehen, die sich einerseits am Filterkopf und andererseits am Ventilschieber abstützt und den Ventilschieber in Richtung des Ringfilterelements in seine Schließposition vorspannt. Das Vorspannen in die Schließposition ist dabei besonders wichtig, da erst der Einbau eines geeigneten Ringfilterelements zum Öffnen des Ventils führen soll. Wird kein derartiges Ringfilterelement in dem Filtergehäusetopf eingesetzt, bleibt das Ventil geschlossen und ein Betrieb der Brennkraftmaschine ist nicht möglich.

Bei einer weiteren vorteilhaften Ausführungsform der erfindungsgemäßen Lösung weist der Ventilschieber einen radial nach außen stehenden Kragen auf, über welchen er sich an der oberen Endscheibe des Ringfilterelements abstützt. Dieser Kragen dient dabei als Anschlag für die obere Endscheibe des Ringfilterelements, so dass bei einem in dem Filtergehäusetopf eingesetzten Ringfilterelement und bei einem sich daran anschließenden Montieren des Filtergehäusetopfs am Filterkopf, das Ringfilterelement mit seiner oberen Endscheibe am Kragen des Ventilschiebers abstützt und diesen bei der Montage nach oben in seine Öffnungsposition verstellt. Um den Einbau lediglich autorisierter Ringfilterelemente zuverlässig gewährleisten zu können, ist darüber hinaus denkbar, dass zwischen dem Ventilschieber, insbesondere im Bereich seines Kragens, und der oberen Endscheibe des Ringfilterelements eine sogenannte "Schlüssel-Schloss-Kontur" eingesetzt wird, das heißt das Öffnen des Ventils mittels des zugehörigen Ringfilterelements kann nur dann erfolgen, sofern die obere Endscheibe des Ringfilterelements eine zu an dem Ventilschieber angeordneten Schlosskontur passende Schlüsselkontur aufweist. Dies kann beispielsweise durch entsprechend gestaltete Nuten ausgeführt sein.

Bei einer weiteren vorteilhaften Ausführungsform der erfindungsgemäßen Lösung weist der Ventilkörper radial nach außen abstehende Abstandselemente auf, die den Ventilkörper im Innenraum des Ringfilterelements ausrichten bzw. positionieren. Hierdurch kann eine besonders exakte Einbauposition erzwungen werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Filtereinrichtung,
- Fig. 2: eine Schrägansicht von oben auf einen Filtergehäusetopf mit eingesetztem Ringfilterelement im Bereich eines Bajonettflügels und einer zugehörigen filtergehäusetopfseitigen Ausnehmung,
- Fig. 3: eine Detailansicht des Bajonettverschlusses von außen,
- Fig. 4: eine Schnittdarstellung durch den Filterkopf im Bereich einer Rampenkontur mit einem Ringfilterelement in einer Ein-/Ausbauposition,
- Fig. 5: eine Ansicht wie in Fig. 4, jedoch bei montiertem Ringfilterelement,
- Fig. 6: eine Ansicht von unten auf den Filterkopf,
- Fig. 7: eine Schrägansicht auf eine obere Endscheibe eines Ringfilterelements,
- Fig. 8a: eine Schnittdarstellung durch die erfindungsgemäße Filtereinrichtung im Bereich eines zentral angeordneten Ventils bei geschlossenem Ventil,
- Fig. 8b: eine Darstellung wie in Fig. 8a, jedoch bei geöffnetem Ventil,
- Fig. 9a: eine Teildarstellung des Ventils in geschlossenem Zustand,
- Fig. 9b: eine Darstellung des Ventils in geöffnetem Zustand.

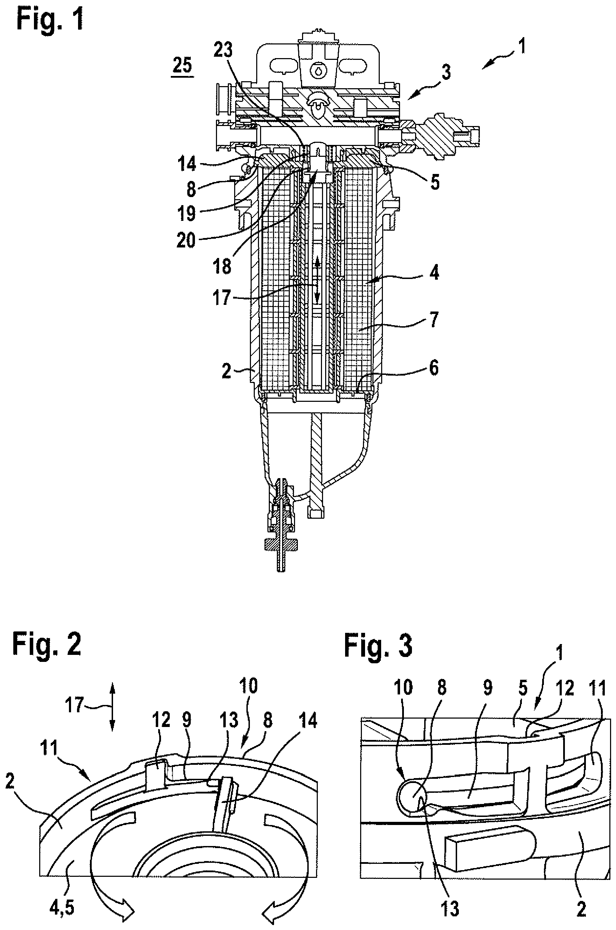

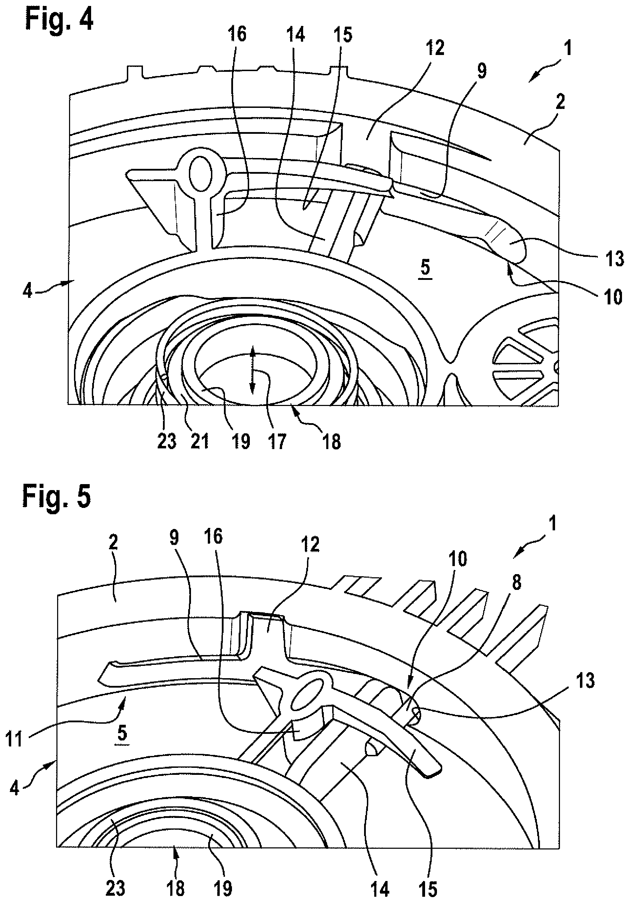

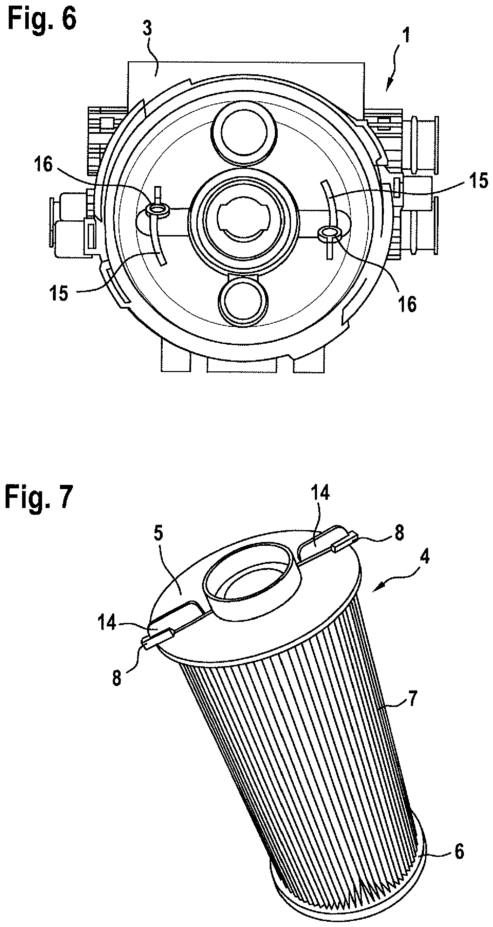

Entsprechend der Figur 1, weist eine erfindungsgemäße Filtereinrichtung 1, die insbesondere als Öl- oder Kraftstofffilter ausgebildet sein kann, einen becherförmigen Filtergehäusetopf 2 (vergleiche auch die Figuren 2 bis 5) und einen Filterkopf 3 (vergleiche auch die Figuren 4 bis 6) auf, wobei in dem Filtergehäusetopf 2 ein Ringfilterelement 4 (vergleiche Figur 7) angeordnet ist, ein in eine obere Endscheibe 5 und in eine untere Endscheibe 6 eingebettetes Filtermaterial 7 umfasst. An der oberen Endscheibe 5 des Ringfilterelements 4 sind dabei zumindest zwei radial nach außen ragende Bajonettflügel 8 (vergleiche auch die Figuren 2 bis 5) angeordnet, die mit an dem Filtergehäusetopf 2 angeordneten Ausnehmungen 9 (vergleiche die Fig. 2 bis 5) in der Art eines Bajonettverschlusses zusammenwirken. Die Bajonettflügel 8 können dabei als einfache stiftförmige radiale Verlängerungen ausgebildet sein. Die Ausnehmungen 9 definieren dabei in Umfangsrichtung des Ringfilterelements 4 jeweils längsendseitig eine erste Endstellung 10 und vorzugsweise auch eine gegenüberliegende zweite Endstellung 11 des darin geführten Bajonettflügels 8, wobei zwischen der ersten und zweiten Endstellung 10, 11, das heißt zwischen dem ersten und zweiten Längsende der Ausnehmung 9, eine Entnahmekontur 12 vorgesehen ist, über welche der jeweilige Bajonettflügel 8 in die Ausnehmung 9 eingeschoben und aus dieser auch wieder entnommen werden kann. Über die Entnahmekontur 12 ist dabei ein Lösen des Bajonettverschlusses und damit ein Entnehmen des Ringfilterelements 4 aus dem Filtergehäusetopf 2 bzw. ein Einsetzen des Ringfilterelements 4 in den Filtergehäusetopf 2 möglich. Im Bereich der ersten Endstellung 10 ist dabei eine Hinterschnittkontur 13 vorgesehen (vergleiche Figuren 2 bis 5), in welcher der Bajonettflügel 8 bei montierter Filtereinrichtung 1 fixiert ist. An der oberen Endscheibe 5 des Ringfilterelements 4 sind darüber hinaus zumindest zwei Mitnehmer 14 angeordnet. Am Filterkopf 3 ist eine Rampenkontur mit zumindest zwei in Richtung der Mitnehmer 14 ansteigenden Rampen 15 und zwei Anschlägen 16 angeordnet, die derart mit den Mitnehmern 14 zusammenwirken, dass bei einem Montieren der Filtereinrichtung 1 die endscheibenseitigen Mitnehmer 14 auf den Rampen 15 bis
zum jeweiligen Anschlag 16 gleiten und nach dem Erreichen der Anschläge 16 Bajonettflügel 8 in die Hinterschnittkonturen 13 der zugehörigen Ausnehmung 9 drücken und dadurch das Ringfilterelement 4 zuverlässig im Filtergehäusetopf 2 fixieren. Die Mitnehmer 14 und die filterkopfseitigen Rampen 15 bzw. Anschläge 16 drehen dabei das Ringfilterelement in die jeweilige Betriebs- bzw. Ausbauposition.

Betrachtet man beispielsweise die Figur 2, so kann man erkennen, dass bei einer Montage des Filtergehäusetopfes 2 mit daran angeordnetem Ringfilterelement 4 am Filterkopf 3 das Ringfilterelement 4 im Uhrzeigersinn gedreht wird, so dass dessen Bajonettflügel 8 in der Ausnehmung 9 in Richtung der ersten Endstellung 10 verstellt wird. Gleichzeitig gleitet der Mitnehmer 14 entlang der ansteigenden Rampe 15 bis zum Anschlag 16, wodurch der Bajonettflügel 8 in die Hinterschnittkontur 13 eingedrückt und dort verrastet wird. Beim Lösen des Filtergehäusetopfes 2 vom Filterkopf 3 erfolgt ein Verdrehen des Filtergehäusetopfes 2 entgegen dem Uhrzeigersinn, wodurch der Bajonettflügel 8 von der ersten Endstellung 10 in Richtung der zweiten Endstellung 11 verstellt wird. Nach dem Abnehmen des Filtergehäusetopfes 2 vom Filterkopf 3 verbleibt jedoch das Ringfilterelement 5 noch im Filtergehäusetopf 2, da die Bajonettflügel 8 immer noch in der Ausnehmung 9 im Bereich der zweiten Endstellung 11 gehalten sind. Um das Ringfilterelement 4 nun aus dem Filtergehäusetopf 2 zu entfernen, muss das Ringfilterelement 4 relativ zum Filtergehäusetopf 2 so verdreht werden, dass die Bajonettflügel 8 zur Entnahmekontur 12 fluchten und dadurch das Ringfilterelement 4 aus dem Filtergehäusetopf 2 herausgezogen werden kann. Ein unbeabsichtigtes Hängenbleiben des Ringfilterelements 4 am Filterkopf 3 bei der Demontage des Filtergehäusetopfes 2 kann mit dem erfindungsgemäßen Bajonettverschluss und der zugehörigen Rampenkontur zuverlässig vermieden werden.

Betrachtet man die Figuren 1, 2, 4, 5 und 7, so kann man erkennen, dass die Mitnehmer 4 als Radialrippen ausgebildet sind und zudem fluchtend zu den Bajonettflügeln 8 angeordnet sind, wobei sich die Bajonettflügel 8 radial außen an die Mitnehmer 14 anschließen. Die Bajonettflügel 8 und/oder die Mitnehmer 14 können dabei einstückig mit der oberen Endscheibe 5 ausgebildet und dadurch kostengünstig hergestellt werden. Betrachtet man die Figuren 2 bis 5, so kann man erkennen, dass die Entnahmekonturen 12 in Axialrichtung 17 der Filtereinrichtung 1 verlaufen.

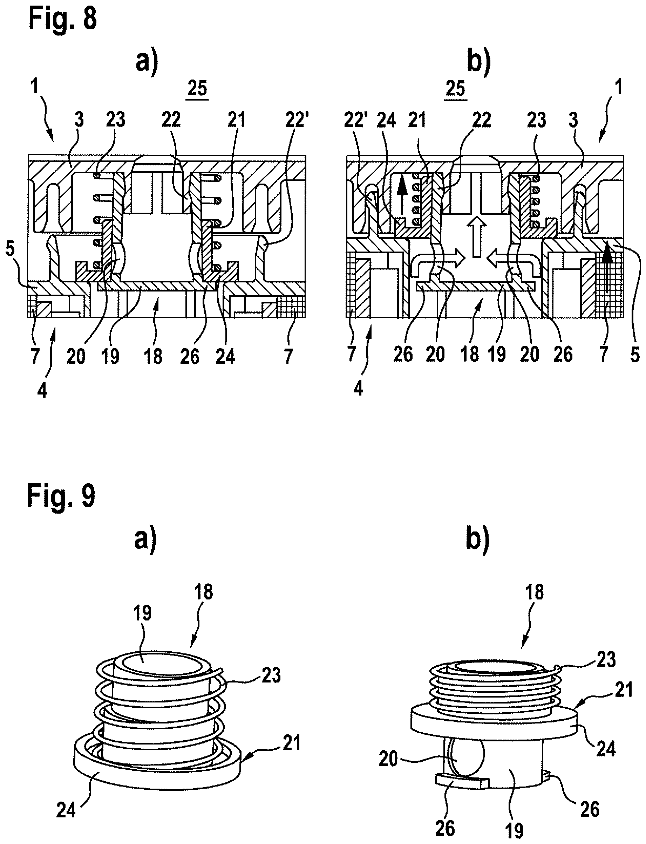

Um die Funktionsweise der erfindungsgemäßen Filtereinrichtung 1 zusätzlich absichern zu können, ist zwischen dem Filterkopf 3 und dem Ringfilterelement 4 ein Ventil 18 (vergleiche Fig. 8 und 9) angeordnet, das ausschließlich bei eingebautem Ringfilterelement 4, das heißt im Betriebszustand der Filtereinrichtung 1, geöffnet ist (vergleiche Fig. 8b und 9b). Das Ventil 18 selbst besitzt dabei einen rohrförmigen Ventilkörper 19 mit zumindest einer mantelseitigen Öffnung 20 und einem darauf verschiebbaren Ventilschieber 21. Betrachtet man beispielsweise die Figuren 8a und 8b, so kann man erkennen, dass das Ventil 18 über eine Rastverbindung 22 mit dem Filterkopf 3 verrastet ist. Über eine weitere Rastverbindung 22' ist auch eine Verrastung der oberen Endscheibe 5, das heißt des Ringfilterelements 4 mit dem Filterkopf 3 möglich. Mittels der Rastverbindung 22 lässt sich das Ventil 18 vergleichsweise einfach am Filterkopf 3 befestigen bzw. wieder von diesem lösen.

Betrachtet man die Figuren 8 und 9 weiter, so kann man erkennen, dass das Ventil 18 zusätzlich noch eine Feder 23 aufweist, die sich einerseits am Filterkopf 3 und andererseits am Ventilschieber 21 abstützt (vergleiche die Figuren 8a und 8b) und den Ventilschieber 21 in Richtung des Ringfilterelements 4 und damit in seine Schließposition vorspannt. Bei montierter Filtereinrichtung 1 greift dabei der Ventilkörper 21 in einen Innenraum des Ringfilterelements 4 ein, wie dies beispielsweise gemäß der Fig. 8b dargestellt ist. Darüber hinaus besitzt der Ventilschieber 21 einen radial nach außen abstehenden Kragen 24, über welchen er sich an der oberen Endscheibe 5 des Ringfilterelements 4 abstützt.

Beim Einbau des Ringfilterelements 4 in die Filtereinrichtung 1 wird dieses zunächst mit dem Filtergehäusetopf 2 von unten gegen den Filterkopf 3 gedrückt und anschließend kann beispielsweise ein Verschrauben des Filtergehäusetopfes 2 mit dem Filterkopf 3 erfolgen. Durch ein sich dabei langsames nach oben Bewegen des Ringfilterelements 4 stützt sich dieses über dessen Endscheibe 5 am Kragen 24 des Ventilschiebers 21 ab und drückt diesen nach oben, bis dieser die mantelseitige Öffnungen 20 im Ventilkörper 19 freigibt und dadurch einen Fluidabfluss von gereinigtem Fluid ermöglicht. Wird beispielsweise versehentlich kein Ringfilterelement 4 in den Filtergehäusetopf 2 eingesetzt, so kann zwar der Filtergehäusetopf 2 mit dem Filterkopf 3 verbunden werden, durch das fehlende Ringfilterelement 4 erfolgt jedoch kein Öffnen des Ventils 18 und damit kein Fluiddurchfluss durch die erfindungsgemäße Filtereinrichtung 1, woraufhin beispielsweise eine damit verbundene Brennkraftmaschine 25 nicht startet.

Mit der erfindungsgemäßen Filtereinrichtung 1 lässt sich ein erheblicher Montagevorteil erzielen, da bei einer Demontage des Ringfilterelements 4 dieses zunächst zuverlässig zusammen mit dem Filtergehäusetopf 2 vom Filterkopf 3 abgenommen und erst später aus diesem entnommen werden kann. Ein unbeabsichtigtes und unerwünschtes Hängenbleiben des Ringfilterelements 4 am Filterkopf 3 kann mittels des Bajonettverschlusses und den filterkopfseitigen Rampen 15 bzw. Anschlägen 16 zuverlässig vermieden werden. Darüber hinaus weist der Ventilkörper 19 radial nach außen abstehende Abstandselemente 26 auf, welche den Ventilkörper 19 im Innenraum des Ringfilterelements 4 ausrichten bzw. positionieren, wie dies gemäß den Fig. 8 und 9 dargestellt ist.

## Patentansprüche

1. Filtereinrichtung (1), insbesondere ein Öl- oder Kraftstofffilter, mit einem Filtergehäusetopf (2) und einem Filterkopf (3), wobei im Filtergehäusetopf (2) ein Ringfilterelement (4) angeordnet ist, das eine obere Endscheibe (5) aufweist, an der zumindest zwei radial nach außen ragende Bajonettflügel (8) angeordnet sind, die mit an dem Filtergehäusetopf (2) angeordneten Ausnehmungen (9) in der Art eines Bajonettverschlusses zusammenwirken,
**dadurch gekennzeichnet,**
- **dass** die Ausnehmungen (9) in Umfangsrichtung längsendseitig eine erste Endstellung (10) des darin geführten Bajonettflügels (8) definieren,
- **dass** im Bereich der ersten Endstellung (10) eine Hinterschnittkontur (13) vorgesehen ist, in welcher der Bajonettflügel (8) bei montierter Filtereinrichtung (1) fixiert ist,
- **dass** an der oberen Endscheibe (5) des Ringfilterelements (4) zumindest zwei Mitnehmer (14) angeordnet sind,
- **dass** am Filterkopf (3) zumindest zwei in Richtung der Mitnehmer (14) ansteigende Rampen (15) und zwei Anschläge (16) angeordnet sind, die derart mit den Mitnehmern (14) zusammenwirken, dass bei einem Montieren der Filtereinrichtung (1) die endscheibenseitigen Mitnehmer (14) auf den Rampen (15) bis zum jeweiligen Anschlag (16) gleiten und nach dem Erreichen der Anschläge (16) die Bajonettflügel (8) in die Hinterschnittkonturen (13) der zugehörigen Ausnehmung (9) drücken.

2. Filtereinrichtung nach Anspruch 1,
**dadurch gekennzeichnet,**
**dass** die Ausnehmungen (9) in Umfangsrichtung jeweils längsendseitig eine erste und zweite Endstellung (10,11) des darin geführten Bajonettflügels (8) definieren, wobei zwischen der ersten und zweiten Endstellung (10,11) eine Entnahmekontur (12) vorgesehen ist, über welche der jeweilige Bajonettflügel (8) in die Ausnehmung (9) eingeschoben und aus dieser entnommen werden kann.

3. Filtereinrichtung nach Anspruch 1 oder 2,
**dadurch gekennzeichnet,**
- **dass** die Mitnehmer (14) als Radialrippen ausgebildet sind, und/oder
- **dass** die Mitnehmer (14) in Radialrichtung fluchtend zu den Bajonettflügeln (8) angeordnet sind.

4. Filtereinrichtung nach einem der Ansprüche 1 bis 3,
**dadurch gekennzeichnet,**
**dass** die Bajonettflügel (8) und/oder die Mitnehmer (14) einstückig mit der oberen Endscheibe (5) ausgebildet sind.

5. Filtereinrichtung nach einem der Ansprüche 2 bis 4,
**dadurch gekennzeichnet,**
**dass** die Entnahmekonturen (12) in Axialrichtung (17) der Filtereinrichtung (1) verlaufen.

6. Filtereinrichtung nach einem der Ansprüche 1 bis 5,
**dadurch gekennzeichnet,**
**dass** zwischen dem Filterkopf (3) und dem Ringfilterelement (4) ein Ventil (18) angeordnet ist, das ausschließlich bei eingebautem Ringfilterelement (4) geöffnet ist.

7. Filtereinrichtung nach Anspruch 6,
**dadurch gekennzeichnet,**
**dass** das Ventil (18) einen rohrförmigen Ventilkörper (19) mit zumindest einer mantelseitigen Öffnung (20) und einen darauf verschiebbaren Ventilschieber (21) aufweist.

8. Filtereinrichtung nach Anspruch 7,
**dadurch gekennzeichnet,**
**dass** der Ventilkörper (19) über eine Rastverbindung (22) mit dem Filterkopf (3) verrastet ist.

9. Filtereinrichtung nach Anspruch 7 oder 8,
**dadurch gekennzeichnet,**
**dass** eine Feder (23) vorgesehen ist, die sich einerseits am Filterkopf (3) und andererseits am Ventilschieber (21) abstützt und den Ventilschieber (21) in Richtung des Ringfilterelements (4) in seine Schließposition vorspannt.

10. Filtereinrichtung nach einem der Ansprüche 7 bis 9,
**dadurch gekennzeichnet,**
- **dass** der Ventilkörper (19) bei montierter Filtereinrichtung (1) in einen Innenraum des Ringfilterelements (4) eingreift, und/oder
- **dass** der Ventilschieber (21) einen radial nach außen stehenden Kragen (24) aufweist, über welchen er sich an der oberen Endscheibe (5) des Ringfilterelements (4) abstützt.

11. Filtereinrichtung nach einem der Ansprüche 7 bis 10,
**dadurch gekennzeichnet,**
**dass** der Ventilkörper (19) radial nach außen abstehende Abstandselemente (26) aufweist, welche den Ventilkörper (19) im Innenraum des Ringfilterelements (4) ausrichten.

## Claims

1. Filter device (1), in particular an oil and fuel filter, having a filter housing jar (2) and a filter head (3), wherein arranged in the filter housing jar (2) is a ring filter element (4), which has an upper end disc (5) on which at least two radially outward-projecting bayonet wings (8) are arranged which interact with recesses (9) arranged on the filter housing jar (2) in the manner of a bayonet catch,
**characterised in that**
- the recesses (9), at longitudinal ends in the circumferential direction, define a first end position (10) of the bayonet wing (8) guided therein,
- in the region of the first end position (10), an undercut contour (13) is provided in which the bayonet wing (8) is engaged when the filter device (1) is mounted,
- at least two driving elements (14) are arranged on the upper end disc (5) of the ring filter element (4),
- at least two ramps (15) rising in the direction of the driving elements (14) and two stops (16) are arranged on the filter head (3) and interact with the driving elements (14) in such a way that when mounting the filter device (1), the driving elements (14) on the end disc slide on the ramps (15) as far as the respective stop (16) and, after reaching the stops (16), press the bayonet wings (8) into the undercut contours (13) of the associated recesses (9).

2. Filter device according to claim 1,
**characterised in that**
the recesses (9) each define, at longitudinal ends in the circumferential direction, a first and second end position (10, 11) of the bayonet wing (8) guided therein, wherein a removing contour (12) is provided between the first and second end position (10, 11), via which the respective bayonet wing (8) is introducible into and removable from the recess (9).

3. Filter device according to claim 1 or 2,
**characterised in that**
- the driving elements (14) are designed as radial ribs and/or
- the driving elements (14) are arranged flush with the bayonet wings (8) in the radial direction.

4. Filter device according to any of claims 1 to 3,
**characterised in that**
the bayonet wings (8) and/or the driving elements (14) are formed in one piece with the upper end disc (5).

5. Filter device according to any of claims 2 to 4,
**characterised in that**
the removing contours (12) extend in the axial direction (17) of the filter device (1).

6. Filter device according to any of claims 1 to 5,
**characterised in that**
a valve (18) is arranged between the filter head (3) and the ring filter element (4) which is only opened when the ring filter element (4) is fitted.

7. Filter device according to claim 6,
**characterised in that**
the valve (18) has a tubular valve body (19) having at least one opening (20) on a casing and a valve slide (21) which is displaceable thereon.

8. Filter device according to claim 7,
**characterised in that**
the valve body (19) is latched to the filter head (3) via a latching connection (22).

9. Filter device according to claim 7 or 8,
**characterised in that**
a spring (23) is provided which rests against the filter head (3) on one side and against the valve slide (21) on the other side, and pretensions the valve slide (21), in the direction of the ring filter element (4), into its closed position.

10. Filter device according to any of claims 7 to 9,
**characterised in that**
- when the filter device (1) is mounted, the valve body (19) engages into an inner chamber of the ring filter element (4), and/or
- the valve slide (21) has a radially outward-projecting collar (24) via which it rests against the upper end disc (5) of the ring filter element (4).

11. Filter device according to any of claims 7 to 10,
**characterised in that**
the valve body (19) has radially outward-extending spacer elements (26) which align the valve body (19) in the inner chamber of the ring filter element (4).

## Revendications

1. Dispositif de filtration (1), en particulier un filtre à huile ou à carburant, comprenant un pot de boîtier de filtre (2) et une tête de filtre (3), dans lequel un élément filtrant annulaire (4) est agencé dans le pot de boîtier de filtre (2), qui présente un disque d'extrémité supérieur (5) au niveau duquel au moins deux ailettes à baïonnette (8) faisant saillie radialement vers l'extérieur sont agencées, qui interagissent avec des évidements (9) agencés au niveau du pot de logement de filtre (2) à la manière d'un raccord à baïonnette,
**caractérisé en ce que**
- les évidements (9) définissent une première position d'extrémité (10) de l'ailette à baïonnette (8) guidée dans ceux-ci dans la direction périphérique du côté de leurs extrémités longitudinales,
- un contour de contre-dépouille (13) est prévu dans la zone de la première position d'extrémité (10), dans laquelle l'ailette à baïonnette (8) est fixée lorsque le dispositif de filtration (1) est monté,
- au moins deux éléments d'entraînement (14) sont agencés sur le disque d'extrémité supérieur (5) de l'élément filtrant annulaire (4),
- au moins deux rampes (15) montant en direction des éléments d'entraînement (14) et deux butées (16) sont agencées au niveau de la tête de filtre (3), qui coopèrent avec les éléments d'entraînement (14) de telle sorte que lorsque le dispositif de filtration (1) est monté, les éléments d'entraînement (14) côté disque d'extrémité glissent sur les rampes (15) jusqu'à la butée (16) respective et après que les butées (16) ont été atteintes, poussent les ailettes à baïonnette (8) dans les contours de contre-dépouille (13) de l'évidement (9) associé.

2. Dispositif de filtration selon la revendication 1,
**caractérisé en ce que**
les évidements (9), dans la direction périphérique du côté de leurs extrémités longitudinales définissent chacun des première et seconde positions d'extrémité (10, 11) de l'ailette à baïonnette (8) guidée dans ceux-ci, dans lequel un contour de retrait (12) est prévu entre les première et seconde positions d'extrémité (10, 11) par l'intermédiaire duquel l'ailette à baïonnette (8) respective peut être insérée dans et retirée de l'évidement (9).

3. Dispositif de filtration selon la revendication 1 ou 2,
**caractérisé en ce que**
- les éléments d'entraînement (14) sont conçus sous la forme de nervures radiales, et/ou
- les éléments d'entraînement (14) sont alignés dans une direction radiale par rapport aux ailettes à baïonnette (8).

4. Dispositif de filtration selon l'une des revendications 1 à 3,
**caractérisé en ce que**
les ailettes à baïonnette (8) et/ou les éléments d'entraînement (14) sont formés d'un seul tenant avec le disque d'extrémité supérieur (5).

5. Dispositif de filtration selon l'une des revendications 2 à 4,
**caractérisé en ce que**
les contours de retrait (12) s'étendent dans une direction axiale (17) du dispositif de filtration (1).

6. Dispositif de filtration selon l'une des revendications 1 à 5,
**caractérisé en ce que**
entre la tête de filtre (3) et l'élément filtrant annulaire (4) est agencée une soupape (18), qui n'est ouverte que lorsque l'élément filtrant annulaire (4) est installé.

7. Dispositif de filtration selon la revendication 6,
**caractérisé en ce que**
la soupape (18) a un corps de soupape tubulaire (19) avec au moins une ouverture côté enveloppe (20) et un tiroir de soupape (21) qui peut être déplacé sur celle-ci.

8. Dispositif de filtration selon la revendication 7,
**caractérisé en ce que**
le corps de soupape (19) est verrouillé sur la tête de filtre (3) via une liaison par encliquetage (22).

9. Dispositif de filtration selon la revendication 7 ou 8,
**caractérisé en ce que**
un ressort (23) est prévu, qui est supporté d'une part sur la tête de filtre (3) et d'autre part sur le tiroir de soupape (21) et sollicite le tiroir de soupape (21) en direction de l'élément filtrant annulaire (4) dans sa position fermée.

10. Dispositif de filtration selon l'une des revendications 7 à 9,
**caractérisé en ce que**
- le corps de soupape (19), avec le dispositif de filtration (1) monté, vient en prise avec un espace intérieur de l'élément filtrant annulaire (4), et/ou
- le tiroir de soupape (21) présente un rebord s'étendant radialement vers l'extérieur (24), au niveau duquel il prend appui sur le disque d'extrémité supérieur (5) de l'élément filtrant annulaire (4).

11. Dispositif de filtration selon l'une des revendications 7 à 10,
**caractérisé en ce que**
le corps de soupape (19) présente des éléments d'espacement (26) faisant saillie radialement vers l'extérieur, qui orientent le corps de soupape (19) dans l'espace intérieur de l'élément filtrant annulaire (4).
